# EUROPÄISCHE PATENTSCHRIFT

(11) **EP 1 087 172 B1**
(45) Veröffentlichungstag und Bekanntmachung des Hinweises auf die Patenterteilung: **03.03.2004**
(21) Anmeldenummer: 00120787.7
(22) Anmeldetag: 22.09.2000
(51) Int. Cl.: F16L 55/11

(54) **Vorrichtung zum endseitigen Verschliessen eines Rohres**
Device for closing a pipe end
Dispositif pour fermer l'extrémité d'un tube

(30) Priorität: 24.09.1999 DE 19947473
(43) Veröffentlichungstag der Anmeldung: 28.03.2001
(73) Patentinhaber: Dockweiler Aktiengesellschaft, 19306 Neustadt-Glewe (DE)
(72) Erfinder: Fiebig, Klaus-Dieter, 21465 Reinbek (DE)
(74) Vertreter: Patentanwälte Hauck, Graalfs, Wehnert, Döring, Siemons, Schildberg

(56) Entgegenhaltungen:
- FR-A- 1 066 132
- GB-A- 2 025 555
- US-A- 608 613

## Beschreibung

Die Erfindung betrifft einen endseitigen Verschluß eines Rohres, insbesondere zum hochgasdichten Verschließen des Rohres, nach Patentanspruch 1.

Bei der Verwendung von Rohren zum Leiten von Medien, beispielsweise Gas, ist es immer wieder erforderlich, ein Rohrende abzuschließen. Ein solcher Rohrabschluß kann beispielsweise dadurch erforderlich werden, daß eine Rohrleitung zeitweise nicht weitergeführt werden soll. Insbesondere bei Rohrleitungssystemen, die in mehreren Stufen ausgebaut werden, ergibt sich häufig die Notwendigkeit, Rohrleitungen, die für einen weiteren Ausbau des Rohrleitungssystems vorgesehen sind, zunächst zu verschließen. Aber auch bei der Systemherstellung kann ein zeitweiliger Abschluß zweckmäßig sein, beispielsweise um Verschmutzung zu vermeiden.

Zum Verschließen der Rohrleitungssysteme ist es bekannt, eine Kappe auf das Ende des Rohres zu schweißen. Nachteilig an einem solchen Abschluß des Rohres ist, daß beim Trennen der Kappe vom Rohrende Metallspäne und Verunreinigungen auftreten. Solche Verunreinigungen erfordern insbesondere bei Rohren, die in Halbleiterfabriken, pharmazeutischen Anlagen oder anderen Einsatzorten mit gesteigerten Anforderungen an die Reinheit verwendet werden, eine aufwendige Vorbereitung vor einer erneuten Benutzung der Rohrleitung. Oftmals ist vor einer erneuten Inbetriebnahme der Rohrleitung ein zeit- und kostenintensives Durchspülen der Rohrleitung erforderlich.

Aus US 608,613 ist ein endseitiger Verschluß eines Rohres bekannt geworden, das ein Stutzenelement aus Metall aufweist und mit einem zu verschließenden Rohr verbindbar ist. Am anderen Ende kann es mit einem Verschlußelement verschlossen werden, das eine gegen die Stirnseite des Stutzenelements anlegbare Dichtfläche aufweist.

Ausgehend von diesem Stand der Technik liegt der Erfindung die Aufgabe zugrunde, einen endseitigen Verschluß eines Rohres bereitzustellen, der einfach herstellbar ist, das Rohr dicht abschließt und sich einfach und rückstandsfrei von diesem entfernen läßt.

Erfindungsgemäß wird die Aufgabe mit den Merkmalen des Anspruchs 1 gelöst. Eine solche Vorrichtung ist insbesondere zum hochgasdichten Verschließen eines Rohrendes geeignet. Die Schelle, welche das Stutzenelement umfaßt, preßt in ihrem befestigten Zustand das Verschlußelement axial gegen das Stutzenelement. Dabei wird eine Freisetzung von Verunreinigungen (z.B. Abrieb) vermieden. Vorteilhaft an der Erfindung ist, daß nach einem Entfernen des Verschlußelements an dem befestigten Stutzenelement ein weiteres Rohr angeschlossen werden kann. Das Stutzenelement ist dabei derart ausgebildet, daß es durch Orbitalschweißen an das weitere Rohr befestigt werden kann. Das Entfernen der Schelle und des Verschlußelements erfolgt einfach und ohne ein Eintreten von Verunreinigungen in das Stutzenelement oder das Rohr.

Zur besseren Befestigung des Verschlußelements weist in einer vorteilhaften Ausführung der Erfindung das Stutzenelement einen umlaufenden Bund auf Ein an dem Stutzenelement angeordneter Bund dient der Schelle als Angriffspunkt beim axialen Anpressen des Verschlußelements.

In einer einfachen Ausführungsform der Erfindung weist das Verschlußelement eine Verschlußkappe auf. Die Verschlußkappe besitzt einen Boden und einen umlaufenden Rand, durch den ein Hohlraum gebildet wird, in den das Stutzenelement eingeführt ist. Die aufgesetzte Verschlußkappe wird durch die Schelle mit dem Stutzenelement verbunden.

Zur besseren Verbindung mit dem Stutzenelement weist die Verschlußkappe an ihrem offenen Ende einen umlaufenden Bund auf. Der umlaufende Bund der Verschlußkappe dient als Angriffspunkt für die Schelle bei der Befestigung der Verschlußkappe auf dem Stutzenelement.

Zweckmäßigerweise sind die Bünde des Stutzenelements und der Verschlußkappe an den zu den Flanken der Nut der Schelle weisenden Außenseiten abgeschrägt zur Bildung der Schrägflächen. Ist die Verschlußkappe auf das Stutzenelement gesetzt, so bilden die beiden Bünde an ihren voneinander abgewandten Seiten somit zwei Schrägflächen für die Schelle, deren Verlängerungen radial nach außen spitz zulaufen. Durch ein Anziehen der Schelle, bei dem sich der Innendurchmesser der Schelle verringert, wirkt auf die Bünde durch ihre Schrägflächen eine Längskraft.

Die Nut der Schelle hat an ihren zu den Bünden weisenden Flanken schräge Wandflächen, um durch Anziehen der Schelle ein Aufpressen der Verschlußkappe zu erzeugen.

In einer vorteilhaften Ausgestaltung der Erfindung hat eine Hülse eine äußere Schrägfläche, die auf das Stutzenelement aufgeschoben und zum anderen Ende hin axial festgelegt ist. Ein Verschlußelement in Form eines Deckels hat eine innen liegende umlaufende Nut oder Ringnut, mit der das Stutzenelement in Eingriff bringbar ist.

Zur einfacheren Handhabung kann die Schelle aus zwei Teilen bestehen, die über ein Gelenkglied aneinander befestigt und durch eine Schraube verschließbar sind. Eine solche Schelle erleichtert das Anbringen des Verschlußelements, so daß die Montage durch eine einzelne Person ohne zusätzliche Hilfe erfolgen kann.

Verschlußelement, Stutzenelement und die Schelle sind aus Metall gefertigt. Durch das axiale Aufeinanderpressen des Stutzenelements und der Verschlußkappe bzw. des Verschlußelements wird eine metallische Dichtung erzeugt. Selbst bei einem nicht allzu starken Anziehen der Schelle kann durch das Pressen von Metall auf Metall bereits eine Dichtigkeit erzielt werden, wie sie für ein hochgasdichtes Verschließen eines Rohres (∼10⁻⁹ 1/Jahr) benötigt wird. Als besonders geeignet haben sich hierbei Legierungen eines V4A-Stahls erwiesen, auch ist die Verwendung von Silber möglich.

Zwei besonders vorteilhafte Ausführungsformen der Erfindung werden anhand von Zeichnungen erläutert. Hierbei zeigt:
- Fig. 1: eine Verschlußkappe im Längsschnitt,
- Fig. 2: ein Stutzenelement mit einem umlaufenden Bund im Längsschnitt,
- Fig. 3: eine mit einer Schelle auf dem Stutzenelement nach Fig. 2 befestigte Verschlußkappe im Längsschnitt,
- Fig. 4: ein erfindungsgemäßes Verschlußelement im Längsschnitt,
- Fig. 5: ein Stutzenelement zur Verwendung mit dem Verschlußelement nach Fig. 4 im Längsschnitt,
- Fig. 6: eine zweiteilige Hülse im Längsschnitt und
- Fig. 7: eine mit Hülse und Verschlußelement über eine Schelle verschlossenes Stutzenelement im Längsschnitt.

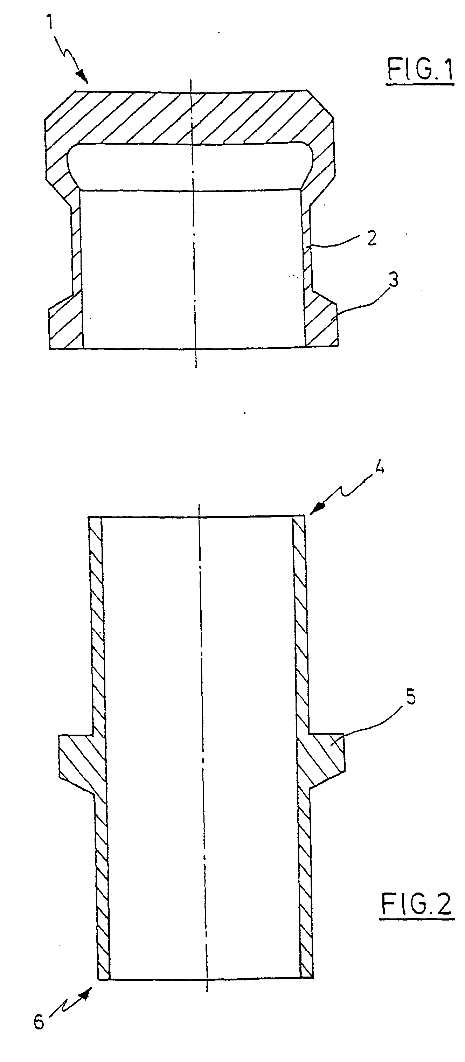

Fig. 1 zeigt ein erfindungsgemäßes Verschlußelement 1, das in Form einer Verschlußkappe einen Schaft 2 aufweist. Der Schaft 2 bildet einen zylindrischen Hohlraum zur Aufnahme eines Stutzenelements 4. An dem offenen Ende der Verschlußkappe ist außen ein umlaufender Bund 5 angeordnet.

Das Stutzenelement 4 ist in Fig. 2 dargestellt. Das Stutzenelement 4 ist rohrförmig und weist außen einen umlaufenden Bund 5 auf. Mit dem durch 6 gekennzeichneten Ende des Stutzenelements 4 wird dieses an dem zu verschließenden Rohr (nicht dargestellt) verschweißt. An dem gegenüberliegenden Ende des Stutzenelements wird, sofern das Stutzenelement nicht verschlossen ist, ein weiteres Rohr durch Orbitalschweißen befestigt.

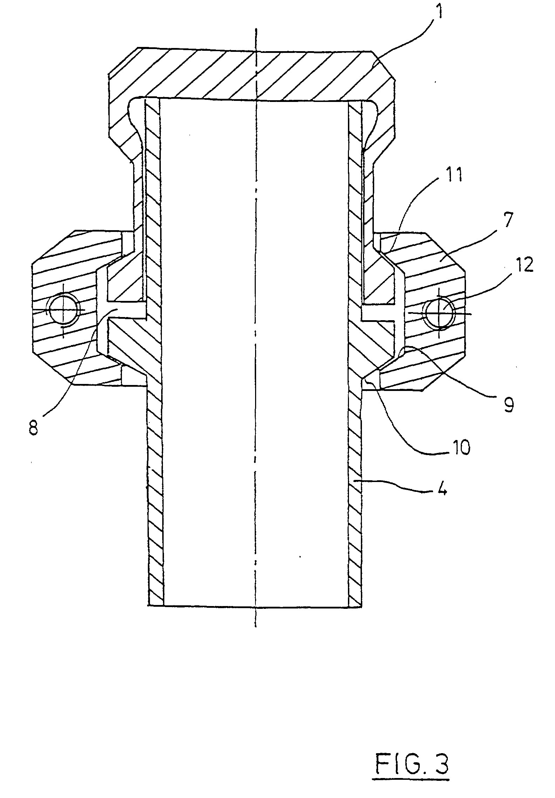

Im verschlossenen Zustand des Stutzenelements 4 ist die Verschlußkappe auf dieses, wie in Fig. 3 dargestellt, aufgesetzt. Befestigt wird die Verschlußkappe an dem Stutzenelement durch eine Schelle 7. Die Schelle 7 weist innen liegend eine Nut 8 auf, in die der Bund der Verschlußkappe und der Bund des Stutzenelements 4 eingreifen. Steht die Nut der Schelle 7 mit dem Bund der Verschlußkappe bzw. des Stutzenelements in Eingriff, so liegen Schrägwände 9 der Schelle an Schrägflächen 10, 11 der entsprechenden Bunde 11. In dem dargestellten Ausführungsbeispiel sind die Schrägwände 9 der Nut parallel zu den Schrägflächen 10 und 11 der Bunde angeordnet. Wird der Innenradius der Schelle 7 verringert, so gleiten die Schrägwände 9 entlang den Schrägflächen 10 und 11 der Bünde. Die Schelle 7 erzeugt auf diese Weise eine Klemmwirkung, durch welche die Verschlußkappe abdichtend auf das Stutzenelement 4 gepreßt wird. Zur Erzielung der Klemmwirkung ist es auch möglich, verschiedene Neigungswinkel für die Schrägflächen 10 und 11 und für die Schrägwände 9 der Schelle 7 zu wählen. Abgedichtet wird der Stutzen hierbei sowohl durch das stirnseitige Aufliegen des Endes des Stutzenelements an dem Kappengrund als auch durch das Anliegen der Schrägwände 9 gegen die Schrägflächen 10 und 11.

Die Schelle 7 kann zwei tangential verlaufende Bohrungen zur Aufnahme von Schrauben aufweisen. Hierbei kann eine Bohrung 8 in einem oder beiden Teilen der Schelle 7 ein Innengewinde aufweisen. Alternativ ist es auch möglich, die Schrauben über externe Muttern an den Schellenteilen zu befestigen. Auch ist es möglich, in dem zwischen Schelle und Verschlußkappe bzw. Stutzenelement gebildeten Hohlraum ein zusätzliches Dichtelement anzuordnen.

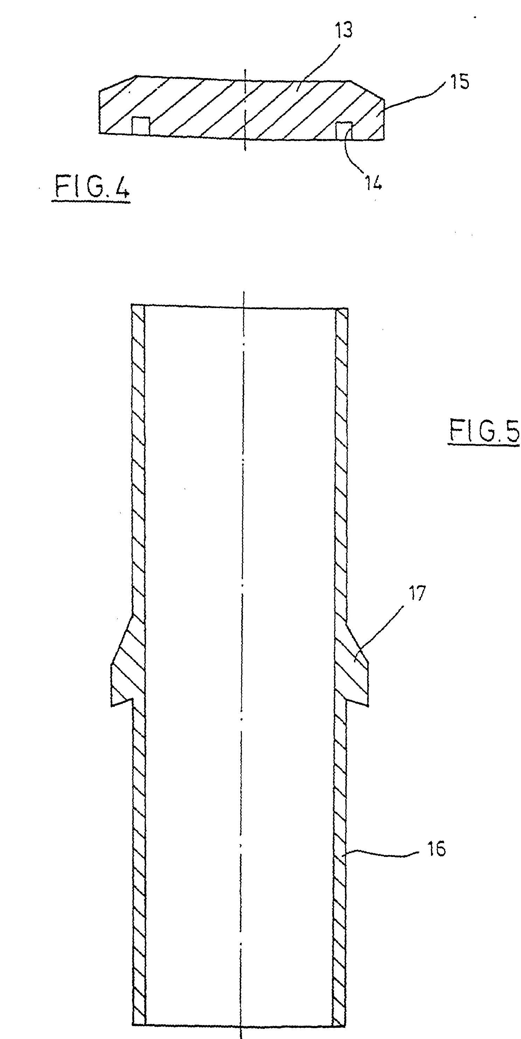

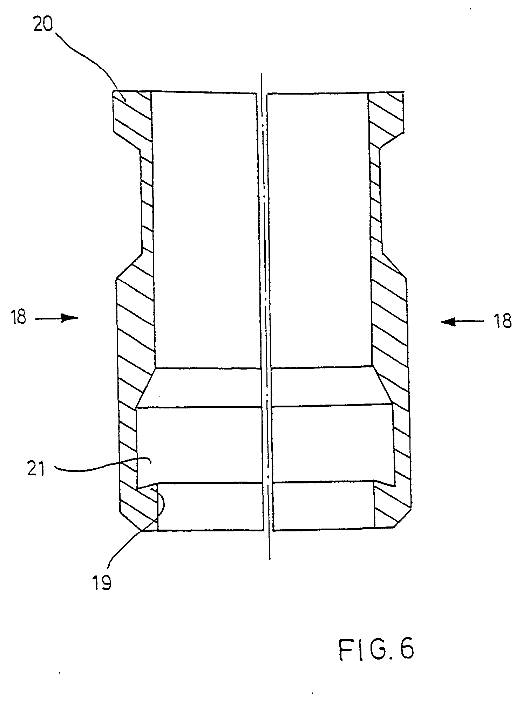

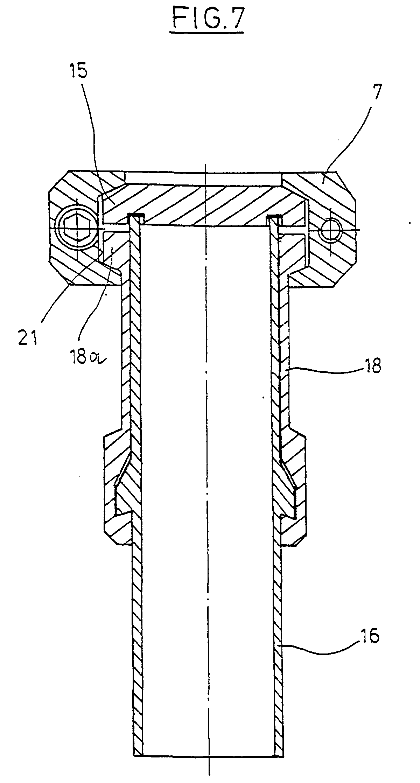

Eine zweite Ausführungsform wird mit Bezug auf Fig. 4 bis 7 erläutert, wobei gleiche Teile mit gleichen Bezugszeichen versehen sind. Fig. 4 zeigt ein Verschlußelement 13 in Deckelform. Der Verschlußdeckel weist auf einer Seite eine Ringnut 14 auf, in die das zu verschließende Ende eines Stutzenelements 16 eingesetzt wird. Radial nach außen schließt sich ein Rand 15 an die Nut 14 an. Der Verschlußdeckel wird mit seiner Nut 14 auf das Stutzenelement 16 aufgesetzt. Das Stutzenelement 16 weist einen umlaufenden Bund 17 auf, der an einer Seite hinterschnitten ist. Auf das Stutzenelement 16 wird eine in Fig. 6 dargestellte Hülse 18 aufgesetzt. Hierbei hintergreift ein ebenfalls mit einem Hinterschnitt versehener Vorsprung 19 den Bund 17 des Stutzenelements 16. Das Stutzenelement 16 weist an dem Ende, welches dem Vorsprung 19 gegenüberliegt, einen umlaufenden Bund 18a auf. Ist die Hülse 18, so wie in Fig. 7 dargestellt, axial geteilt und um das Stutzenelement 16 herum angeordnet, greift eine Schelle 7 mit ihrer innen liegenden Nut 21 an dem Rand 15 des Verschlußdeckels und dem Bund 18a der Hülse 18 an, um den Verschlußdeckel auf das Stutzenelement 16 in axialer Richtung zu pressen. Durch ein Anziehen der Schelle 7 wird der Verschlußdeckel auf das Stutzenelement 16 gepreßt, wobei die Hülse 18 an dem Bund 17 des Stutzenelements 16 gehalten wird. In dieser Ausführungsform liegt die Schelle näher am Ende des Stutzenelements 16 als in dem in Fig. 3 dargestellten Ausführungsbeispiel.

## Patentansprüche

1. Endseitiger Verschluß eines Rohres mit einem Stutzenelement (4, 16) aus Metall, das mit einem Ende mit dem zu verschließenden Rohr verbindbar ist und dessen anderes Ende mit einem anschließenden Rohr verbindbar ausgebildet ist und einem auf das andere Ende des Stutzenelements (4, 16) setzbares Verschlußelement (1, 13), das eine gegen die Stirnseite des anderen Endes anlegbare Dichtfläche aufweist, **dadurch gekennzeichnet, daß** das eine Ende des Stutzenelements (4, 16) als mit dem zu verschließenden Rohr verschweißbar und das andere Ende des Stutzenelements (4, 16) für ein Orbitalverschweißen mit einem anschließenden Rohr ausgebildet ist, auf der Außenseite des Stutzenelements (4, 16) und des Verschlußelements (1, 13) eine zumindest axial zum anderen Ende hin festlegbare Schrägfläche (10, 11) angeordnet ist und eine in Umfangsrichtung zusammenziehbare Schelle (7) vorgesehen ist mit einer inneren Ringnut (8, 21) mit schrägen Wandflächen (9), die mit erster und zweiter Schrägfläche (10, 11) zusammenwirken, wodurch die Dichtfläche gegen die Stirnseite des anderen Endes gepreßt wird, wenn die Schelle (7) zusammengezogen wird.

2. Verschluß nach Anspruch 1, **dadurch gekennzeichnet, daß** die erste Schrägfläche (10) des Stutzenelements (4) an einem umlaufenden Bund (5) ausgebildet ist.

3. Verschluß nach Anspruch 1, **dadurch gekennzeichnet, daß** das Verschlußelement (1) eine Verschlußkappe mit einem Boden und einem umlaufenden Rand (2) aufweist, in die das Stutzenelement (4) mit dem anderen Ende einführbar ist.

4. Verschluß nach Anspruch 3, **dadurch gekennzeichnet, daß** die Verschlußkappe an dem offenen Ende einen umlaufenden Bund (3) aufweist, der die zweite Schrägfläche hat.

5. Verschluß nach einem der Ansprüche 1 bis 4, **dadurch gekennzeichnet, daß** die Schelle (7) aus zwei Teilen besteht, die durch mindestens eine Schraube miteinander verspannbar sind.

6. Verschluß nach Anspruch 1, **dadurch gekennzeichnet, daß** die erste Schrägfläche an einer Hülse (18) geformt ist, die auf das Stutzenelement (16) geschoben ist, die hinter einen äußeren Bund (17) des Stutzenelements (18) greift und in Richtung des anderen Endes axial festgelegt ist und das Verschlußelement (13) Deckelform hat mit einer Ringnut (14) auf einer Seite, in die das andere Ende des Stutzenelements (16) eingreift.

## Claims

1. An end-side closure of a pipe comprising a metallic socket element (4, 16) one end of which is welded onto the pipe being closed and the other end of which is designed for being connected to an adjoining pipe and a closing element (1, 13) adapted to be placed on the other end of the socket element (4, 16) which has a sealing surface adapted to bear against the front-end face of the other pipe end, **characterized in that** the one end of the socket element (4, 16) is adapted to be welded to the pipe to be closed, and the other end of the socket element (4, 16) is adapted to orbitally welded to an adjoining pipe, on the outer side of the metallic socket element (4, 16) and of the closing element (1, 13) an oblique surface (10, 11) is located which oblique surface being adapted to be axially secured at least towards one end, and a clip (7) is provided adapted to be drawn together in circumferential direction and includes an inner circular groove (8, 21) with oblique wall surfaces (9) which interact with the first and second oblique surfaces (10, 11) whereby the sealing surface is pressed against the front-end face of the other end when the clip (7) is drawn together.

2. The end-side closure of claim 1, **characterized in that** the first oblique surface (10) of the socket element (4) is formed on a continuous collar (5).

3. The end-side closure of claim 1, **characterized in that** the closing element (1) has a closing cap with a bottom and a continuous border (2) to which the other end of the socket element (4) is adapted to be introduced.

4. The end-side closure of claim 3, **characterized in that** the open end of the closing cap has a continuous collar (3) which includes the second oblique surface.

5. The end-side closure of one of the claims 1 to 4, **characterized in that** the clip (7) consists of two components which are adapted to be displaced towards each other by at least one screw bolt.

6. The end-side closure of claim 1, **characterized in that** the first oblique surface is formed on a sleeve (18) which is adapted to be pushed onto the socket element (16), the sleeve gripping behind an outer collar (17) of the socket element (16) and is axially fixed towards the other end and that the closing element (13) is lid-shaped and provided with an annular groove (14) of one surface thereof into which the other end of the socket element (16) is engaged.

## Revendications

1. Dispositif pour fermer l'extrémité d'un tube, avec un élément de tuyau (4, 16) en métal, qui est raccordable par une extrémité avec le tube qu'il faut fermer, et dont l'autre extrémité est réalisée de façon qu'elle est raccordable avec un tube adjacent, et avec un élément de fermeture (1, 13) qui se fait mettre sur l'autre extrémité de l'élément de tuyau (4, 16) et qui présente une face d'étanchéité qui se fait appuyer contre le coté de front de l'autre extrémité, **caractérisé en ce que** l'une extrémité de l'élément de tuyau (4, 16) est réalisée pour être soudable avec le tube qu'il faut fermer, et l'autre extrémité de l'élément de tuyau (4, 16) est réalisée pour un soudage orbital avec un tube adjacent, une aire inclinée (10, 11) étant disposée sur le coté extérieur de l'élément de tuyau (4, 16) et de l'élément de fermeture (1, 13), qui est déterminable au moins axialement vers l'autre extrémité, et une agrafe (7) qui est contractable dans la direction circonférentielle est prévue, ladite agrafe ayant une rainure intérieure annulaire (8, 21) avec des aires de paroi inclinées (9) coopérantes avec la première et la deuxième aire inclinée (10, 11), par où la face d'étanchéité est pressée contre le coté de front de l'autre extrémité quand l'agrafe (7) est contractée.

2. Dispositif pour fermer selon la revendication 1, **caractérisé en ce que** la première aire inclinée (10) de l'élément de tuyau (4) est réalisée sur un collet de butée périphérique (5).

3. Dispositif pour fermer selon la revendication 1, **caractérisé en ce que** l'élément de fermeture (1) présente un chapeau de fermeture avec un fond et un bord périphérique (2), dans lequel l'élément de tuyau (4) est introductible avec l'autre extrémité.

4. Dispositif pour fermer selon la revendication 3, **caractérisé en ce que** le chapeau de fermeture présente un collet de butée périphérique (3) dans l'extrémité ouverte, qui a la deuxième aire inclinée.

5. Dispositif pour fermer selon une quelconque des revendications 1 à 4, **caractérisé en ce que** l'agrafe (7) est constituée de deux parts qui se font tendre l'un avec l'autre par au moins une vis.

6. Dispositif pour fermer selon la revendication 1, **caractérisé en ce que** la première aire inclinée est formée dans un manchon (18) qui est poussé sur l'élément de tuyau (16) et qui s'engrène en arrière d'un collet de butée extérieur (17) de l'élément de tuyau (16) et qui est axialement déterminé en direction de l'autre extrémité, et que l'élément de fermeture (13) a la forme de couvercle avec une rainure annulaire (14) sur un coté, dans laquelle s'engage l'autre extrémité de l'élément de tuyau (16).
